# EUROPÄISCHE PATENTSCHRIFT

(11) **EP 0 586 856 B1**
(45) Veröffentlichungstag und Bekanntmachung des Hinweises auf die Patenterteilung: **15.03.1995**
(21) Anmeldenummer: 93111992.9
(22) Anmeldetag: 27.07.1993
(51) Int. Cl.: G01M 1/32, G01M 1/02

(54) **Verfahren zum Unwuchtausgleich an einem Kraftfahrzeugrad**
Procedure for balancing a vehicle wheel
Procédé d'équilibrage d'une roue de véhicule

(30) Priorität: 07.09.1992 DE 4229865
(43) Veröffentlichungstag der Anmeldung: 16.03.1994
(73) Patentinhaber: HOFMANN WERKSTATT-TECHNIK GMBH, D-64319 Pfungstadt (DE)
(72) Erfinder: Rothamel, Karl, D-64342 Seeheim (DE); Diez, Ulrich, D-51580 Reichshof (DE); Drechsler, Josef, D-64319Pfungstadt (DE); Goebel, Eickhart, D-64319 Pfungstadt (DE); Lenhart, Lorenz, D-64347 Griesheim (DE); Rühl, Klaus, D-63762 Grossostheim (DE)
(74) Vertreter: Nöth, Heinz, Dipl.-Phys.

(56) Entgegenhaltungen:
- DE-A- 2 639 384
- DE-A- 4 122 844
- US-A- 3 741 016

## Beschreibung

Die Erfindung betrifft ein Verfahren nach dem Oberbegriff des Patentanspruches 1 und eine Vorrichtung nach dem Oberbegriff des Patentanspruches 13.

Ein derartiges Verfahren und eine derartige Vorrichtung sind aus der US-A 3,741,016 bzw. aus der DE-A 26 39 384 bekannt. Beim bekannten Verfahren und bei der bekannten Vorrichtung werden die Ausgleichsebenen und der Ausgleichsradius für die Auswertung mit den beim Meßlauf gewonnenen Meßwerten zur Bestimmung der einzusetzenden Unwuchtgrößen in entsprechenden Ausgleichswinkellagen mit Hilfe einer Tasteinrichtung abgetastet. Das Einsetzen der Ausgleichsgewichte nach der Bestimmung der Größe der Ausgleichsgewichte und der Winkellagen, in denen die Ausgleichsgewichte einzusetzen sind, wird dem Geschick der den Unwuchtausgleich vornehmenden Person überlassen.

Es ist bekannt (DE-AS 2,001,972 oder Hofmann-Betriebsanleitung Radauswuchtmaschine Geodyna 88/88m, Impr. 9412145-09.86), Abmessungen, insbesondere im Felgenbereich des Kraftfahrzeugrades mit Hilfe einer Abtasteinrichtung zu ermitteln und in der Meßelektronik abzuspeichern. Hierdurch werden der Meßelektronik entsprechende Informationen geliefert für die Berechnung der Größen und Winkellagen der Ausgleichsgewichte, die in den entsprechenden Ausgleichsebenen am Scheibenrad des Kraftfahrzeugrades anzubringen sind. Aus der deutschen Offenlegungsschrift 27 37 524 ist es bei normaler Ausgleichsart, d.h. beim Anbringen der Ausgleichsgewichte an den Felgenhörnern, bekannt, die am Kraftfahrzeugrad angegebenen Nennwerte für die geometrischen Abmessungen bei der Eingabe in den Speicher der Meßelektronik mit einem Korrekturwert zu beaufschlagen, um den axialen Abstand des Schwerpunkts des Ausgleichsgewichts in der jeweiligen Ausgleichsebene zu berücksichtigen. Ferner ist in der älteren deutschen Patentanmeldung P 41 22 844.8 eine Abtasteinrichtung beschrieben, mit der eine genaue Erfassung der Felgenabmessungen bzw. Scheibenradabmessungen in den Ausgleichsebenen für die Eingabe dieser Abmessungen in die Meßelektronik vor Durchführung des Unwuchtmeßvorganges ermöglicht wird.

Aufgabe der Erfindung ist es, ein Verfahren zum Unwuchtausgleich der eingangs genannten Art zu schaffen, bei dem das Einsetzen der Ausgleichsgewichte in den durch die Meßelektronik ermittelten Ausgleichslagen, insbesondere an verdeckten Stellen des Scheibenrades, erleichtert wird.

Diese Aufgabe wird erfindungsgemäß durch die im Anspruch 1 angegebenen Merkmale gelöst. Eine entsprechende Vorrichtung gibt der Anspruch 13 an.

Hierbei wird die mit der Meßelektronik gekoppelte Tasteinrichtung, welche vor oder nach Durchführung des Unwuchtmeßvorgangs zur Einspeicherung der entsprechenden bei der Auswertung der Meßwerte zu berücksichtigenden Scheibenrad- bzw. Felgenabmessungen in die Meßelektronik verwendet wurde, ausgenützt, um den Unwuchtausgleichsvorgang, d.h. das positionsgerechte Anordnen des jeweiligen Ausgleichsgewichts am Scheibenrad in der jeweiligen Ausgleichsebene zu erleichtern. Auf diese Weise erreicht man eine höhere Genauigkeit beim Einsetzen, insbesondere von Klebegewichten in die je nach Felgen- bzw. Scheibenradtyp unterschiedlichen Ausgleichsebenen. Hierbei läßt sich die Genauigkeit vor allem dadurch erhöhen, daß zwischen der vor oder nach dem Unwuchtmeßvorgang durch die Tasteinrichtung abgetasteten Ausgleichsebene und dem ebenfalls abgetasteten wirksamen Ausgleichsradius für die Auswertung der Meßwerte (Abtastmodus) und der bei der positionsgerechten Anordnung des jeweiligen Ausgleichsgewichts, insbesondere Klebegewichts, am Scheibenrad aufzufindenden Ausgleichsebene über die in die Meßelektronik eingespeicherte Ausgleichsebenenposition (Wiederauffindemodus) eine exakte Korrelation vorhanden ist, die mit Hilfe der Tasteinrichtung beim Ausgleichsvorgang ausgenützt wird.

Hierbei ist es möglich, das Wiederauffinden der vor oder nach der Durchführung des Unwuchtmeßvorgangs in die Meßelektronik eingespeicherten Ausgleichsebenenposition zu erleichtern. Dies kann dadurch geschehen, daß mit Hilfe der beispielsweise als Taststange oder Tasthebel ausgebildeten Tasteinrichtung die vorher ausgemessene Ausgleichsebene angefahren wird und der jeweilige Abstand der Tastspitze der Taststange bzw. des Tasthebels oder des beim Unwuchtausgleich wirksamen Schwerpunkts des Ausgleichsgewichts von der wieder aufzufindenden Ausgleichsebene durch entsprechende Signale sichtbar oder hörbar gemacht wird. Dabei kann der jeweilige noch vorhandene Abstand zu der wieder aufzufindenden Ausgleichsebene digital oder sonstwie angezeigt werden. Beim Wiederauffinden der gesuchten Ausgleichsebene kann ein optisches oder auch ein akustisches Signal der Bedienungsperson anzeigen, daß mit der Tasteinrichtung die gesuchte bzw. die wieder aufzufindende Ausgleichsebene erreicht ist.

Dabei kann nach Durchführung der Unwuchtmeßläufe und Anzeige der Ergebnisse des Meßlaufs für die Positionierung der Ausgleichsgewichte, insbesondere Klebegewichte, am Scheibenrad bzw. der Felgenschüssel die Tasteinrichtung (Taststange, Tasthebel), die beispielsweise wie in der deutschen Patentanmeldung P 41 22 844.8 beschrieben, ausgebildet ist, aus der Ruhelage gebracht werden, wodurch ein Schalter betätigt wird, welcher die Meß- bzw. Auswerteelektronik der Auswuchtmaschine auf den Betriebsmodus "Wiederauffinden der Ausgleichsebenen" (Wiederauffindemodus) schaltet. Die Umschaltung kann durch einen manuell betätigbaren Schalter, z.B. Tastenschalter oder ähnliche Betätigungselemente erfolgen. Die Umschaltung kann auch automatisch im zeitlichen Verlauf eines Betriebsablaufprogramms oder durch eine Steuerbewegung der Tasteinrichtung erreicht werden.

Beim Wiederauffindemodus wird die jeweilige Distanz der Tasteinrichtung zu der aufzufindenden Ausgleichsebene beispielsweise in mm angezeigt. Bei einem dynamischen Unwuchtausgleich kann hierzu beispielsweise zuerst der Abstand zur linken Ausgleichsebene angezeigt werden. Wenn die Tasteinrichtung beispielsweise mit ihrer Tastspitze bzw. der Schwerpunkt des in der Tasteinrichtung befestigten Ausgleichsgewichts die gesuchte Ausgleichsebene erreicht hat, ist die Distanzanzeige Null, und diese Anzeige kann noch durch ein beispielsweise akustisches Signal unterstützt werden.

Wenn bei der Bewegung der Abtastebene in Richtung auf die rechte Ausgleichsebene die Mitte zwischen den beiden Ausgleichsebenen überschritten wird, erfolgt eine Distanzanzeige zur rechten Ausgleichsebene, d.h. der Abstand der Tasteinrichtung zur rechten Ausgleichsebene wird an der Auswuchtmaschine angezeigt. Das Erreichen der rechten Ausgleichsebene kann ebenfalls wiederum sowohl durch die Distanzanzeige Null als auch durch ein akustisches Signal angezeigt werden.

Sobald die jeweilige Ausgleichsebene durch die Tasteinrichtung bzw. den Schwerpunkt des an der Tasteinrichtung befestigten Gewichts erreicht ist, kann das Eindrehen des Kraftfahrzeugrades in die Ausgleichsposition (Ausgleichswinkellage) erfolgen. Dies kann in bekannter Weise durch Pfeile unterstützt werden (Hofmann-Betriebsanleitung Radauswuchtmaschine Geodyna 88/88m Impr. 9412145-09.86).

Ferner ist es möglich, die Ausgleichsebene und den wirksamen Durchmesser eines Ausgleichsgewichts, insbesondere Klebegewichts, das an der Felgenschulter oder in der Felgenschüssel (verstecktes Gewicht) anzubringen ist, genau auszumessen. Hierzu werden vor dem Unwuchtmeßvorgang die Innenabmessungen (Innendurchmesser) des Scheibenrades in der jeweiligen Ausgleichsebene in der Weise abgetastet, daß zwischen der Abtasteinrichtung (Abtastspitze, deren jeweilige Positionierung durch die Meß- bzw. Auswerteelektronik wahrgenommen wird) und der abzutastenden Innenabmessung ein Ausgleichsgewicht, z.B. Klebegewicht, angeordnet wird. Hierzu kann das Klebegewicht in eine Haltevorrichtung, welche an der Spitze der Tasteinrichtung (Taststange bzw. Tasthebel) vorgesehen ist, eingesetzt werden. In diesem Fall wird dann das Ausgleichsgewicht als Tastfläche verwendet. Hierdurch wird das Bestimmen der optimalen Ausgleichsebene erleichtert. Die an der Tasteinrichtung vorgesehene Haltevorrichtung für das Ausgleichsgewicht, insbesondere Klebegewicht, wird zum Ausmessen der optimalen Ausgleichsebene und des wirksamen Durchmessers, mit welchem der Schwerpunkt des einzusetzenden Ausgleichsgewichts wirksam wird, ausgenützt. Mit Hilfe der Tasteinrichtung wird dabei das Klebegewicht genau in die Ausgleichsebene gebracht, in welcher während des Unwuchtausgleichsvorgangs das durch den Meßvorgang ermittelte Ausgleichsgewicht eingesetzt, insbesondere eingeklebt, werden soll. Dabei wird beim Abtasten nicht die Tastspitze, sondern das in die Haltevorrichtung eingesetzte Gewicht (Bezugsgewicht) als Bezugspunkt herangezogen. Eine entsprechende Schaltungsanordnung, mit der Abmessungen des Ausgleichsgewichts im Hinblick auf die wirksame Schwerpunktlage berücksichtigt werden, ist aus der DE-OS 27 37 524 bekannt. Für die Übernahme der abgetasteten Abmessungen kann die Tasteinrichtung mit dem aufgesetzten Bezugsgewicht eine bestimmte Zeit, beispielsweise 2 Sekunden, in der gewünschten Position gehalten werden, und durch ein Signal, beispielsweise ein akustisches Signal, kann die Übernahme der abgetasteten Abmessungen im Speicher der Meß- bzw. Auswerteelektronik angezeigt werden. Auf diese Weise können nicht nur durch bestimmte Ausgleichsarten (Gewichteplazierungen) vorgegebene Ausgleichsebenen abgetastet und in die Meßelektronik eingegeben werden, sondern beliebige Ausgleichsebenen, welche ein optimales Positionieren der Ausgleichsgewichte ermöglichen. Bei mehreren vorgegebenen Ausgleichsarten, beispielsweise fünf vorgegebenen Ausgleichsarten, die insbesondere beim Auswuchten von Leichtmetallrädern mit Hilfe von Klebegewichten vorgegeben sind, können Ausgleichsebenen optimal angetastet werden, wobei die anzutastende Stelle durch eine Anzeige, wie im einzelnen noch im Zusammenhang mit dem Unwuchtausgleichsvorgang (Ausgleichsmodus) erläutert wird, kenntlich gemacht wird. Es ist auch hierbei möglich, die Schwerpunktlage des Ausgleichsgewichts mit der jeweiligen Ausgleichsebene in Übereinstimmung zu bringen.

Durch diese Kenntlichmachung der Ausgleichsart erhält die Bedienungsperson einen Hinweis auf die abzutastende Stelle am Scheibenrad, insbesondere im Bereich der Felge des Scheibenrades, sowohl beim Abtasten der Radabmessungen für die Eingabe vor dem Unwuchtmeßvorgang, wie schon erläutert wurde, sondern auch beim Unwuchtausgleichsvorgang durch Einsetzen der Ausgleichsgewichte. Hierzu ist mit der Meßelektronik eine Anzeigeeinrichtung verbunden, die einen Felgenquerschnitt mit den jeweils möglichen Ausgleichsebenen, beispielsweise in Form von Gewichtssymbolen, wiedergibt. Während des Abtastvorgangs (Abtastmodus) wird eine jeweilige für eine ausgewählte Ausgleichsart bestimmte Ausgleichsebene durch ein Signal, beispielsweise durch Blinken des Gewichtssymbols, während des Abtastvorgangs angezeigt. Wenn die Abtasteinrichtung die angezeigte Ausgleichsebene am Kraftfahrzeugrad erreicht, erlischt dann diese Anzeige. Auf diese Weise erhält die Bedienungsperson einen Hinweis auf die an dem Scheibenrad, insbesondere der Felge, anzutastenden Ausgleichsebenen. Es können hierbei fünf separate Ausgleichsebenen, die durch Gewichtssymbole kenntlich gemacht worden sind, abgetastet werden. Die Anzeige der am Kraftfahrzeugrad abzutastenden Ausgleichsebene kann dann beginnen, wenn die Tasteinrichtung aus ihrer Ruhelage bewegt wird. Es kann dadurch ein Schalter betätigt werden, durch welchen die Anzeige eingeschaltet wird. Diese Anzeige kann beispielsweise ein Blinken des entsprechenden Gewichtssymbols an der abgebildeten Felge bzw. dem abgebildeten Felgenquerschnitt erreicht werden. Es wird immer nur eine Ausgleichsebene durch Blinken eines entsprechenden Gewichts angezeigt. Wenn die kenntlich gemachte Ausgleichsebene von der Abtasteinrichtung erreicht wird, kann durch ein akustisches Signal dies kenntlich gemacht werden. Die Anzeige erlischt dann. Falls ein dynamischer Unwuchtausgleich durchgeführt wird, erfolgt die Kenntlichmachung der zweiten Ausgleichsebene in der gleichen Weise. Für die Durchführung des dynamischen Unwuchtausgleichs erfolgt die Anzeige der beiden abzutastenden Ausgleichsebenen somit nacheinander, so daß keine Verwechslungen auftreten können.

Eine erhebliche Erleichterung beim Einsetzen der Ausgleichsgewichte, insbesondere Klebegewichte, beim Ausgleichsmodus ergibt sich für die Bedienungsperson dadurch, daß die Tasteinrichtung in bestimmten Abtaststellungen fixierbar ist. Insbesondere ist sie fixierbar dann, wenn die Tasteinrichtung eine jeweilige Ausgleichsebene erreicht hat. Hierbei wird insbesondere die in axialer Richtung (etwa parallel zur Meßspindel der Auswuchtmaschine) erfolgende Bewegung bzw. der axiale Auszug der Tasteinrichtung blockiert bzw. fixiert. Dies kann mit Hilfe einer Klemmeinrichtung, die manuell betätigbar ist oder auch durch die Meßelektronik angesteuert werden kann, erfolgen. Vor allem beim Wiederauffindemodus ergibt sich für die Bedienungsperson eine erhebliche Erleichterung für das Einsetzen der Ausgleichsgewichte. Die Fixierbarkeit bzw. Blockierbarkeit des axialen Auszugs der Tasteinrichtung kann jedoch auch beim Ausmessen und Einspeichern der Scheibenradabmessungen (Abtastmodus) vorteilhaft sein. Die Klemmvorrichtung kann mechanisch ausgebildet sein, beispielsweise in Form einer Klemmschraube oder eines Exzenters, der mit einer Blattfeder zusammenwirkt, oder in Form einer elektromagnetischen Klemmvorrichtung, wobei letztere bevorzugt zum Einsatz kommt bei der Ansteuerung der Klemmeinrichtung durch die Meßelektronik. Die erleichterte positionsgerechte Anordnung der Ausgleichsgewichte wird nicht nur beim dynamischen Auswuchten, sondern auch beim statischen Auswuchten erreicht.

In den Figuren ist ein Ausführungsbeispiel für die weitere Erläuterung der Erfindung dargestellt. Es zeigt:
- Figur 1:: ein Blockschaltbild einer schematisch dargestellten Tasteinrichtung mit angeschlossener Auswerteeinrichtung;
- Figur 2:: verschiedene durch die Auswerteeinrichtung darstellbare Ausgleichsarten für den Unwuchtausgleich;
- Figur 3:: verschiedene Möglichkeiten der Abtastung von Kraftfahrzeugradfelgen;
- Figur 4:: schematisch einen Gewichteeinsetzvorgang mit Hilfe der Tasteinrichtung;
- Figur 5:: eine Klemmeinrichtung; und
- Figur 6:: eine Abtasteinrichtung zum Abtasten der Gewichtsabmessungen.

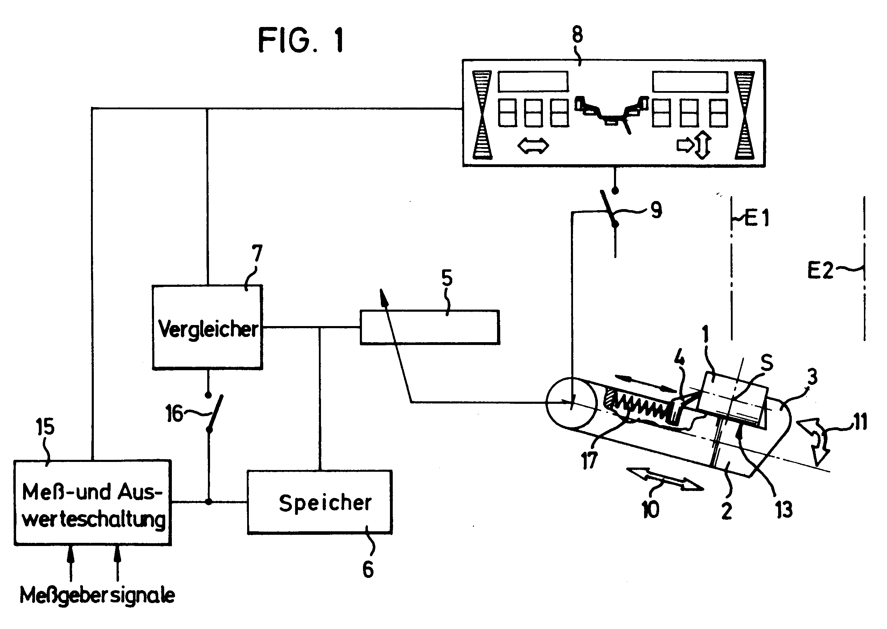

In der Figur 1 ist schematisch eine Tasteinrichtung in Form eines ausziehbaren (Doppelpfeil 10) und schwenkbaren (Doppelpfeil 11) Tasthebels 2 mit einer Tastspitze 3 dargestellt. Zur Positionserkennung ist der Tasthebel 2 mit einer Positionserkennungseinrichtung 5 verbunden. Die Positionserkennungseinrichtung 5 erzeugt elektrische Positionserkennungssignale, die proportional der jeweiligen Auszugslänge (Doppelpfeil 10) und der Schwenklage (Doppelpfeil 11) des Tasthebels 2 sind. Die von der Positionserkennungseinrichtung 5 abgegebenen Signale sind proportional der jeweiligen Positionierung der Tastspitze 3 des Tasthebels 2. In der älteren deutschen Patentanmeldung 441 22 844.8 ist eine detailierte Beschreibung einer verwendbaren Tasteinrichtung mit Positionserkennung beschrieben. Die Positionserkennungseinrichtung 5 kann ein Potentiometer zur Erkennung der Schwenkwinkellage (Pfeil 11) und ein Potentiometer zur Erkennung der Auszuglänge (Pfeil 10) aufweisen. Die von dem Potentiometer erzeugte Analogsignale können nach Digitalisierung gespeichert werden.

Die dargestellte Tasteinrichtung kann nicht nur zum Abtasten eines Scheibenrads, insbesondere im Felgenbereich, beim Abtastmodus verwendet werden, sondern dient durch den Wiederauffindemodus außerdem zur Erleichterung der positionsgerechten Anordnung von Ausgleichsgewichten am Scheibenrad nach Durchführung des Unwuchtmeßvorgangs, wie im einzelnen noch erläutert wird.

Hierzu ist an die Positionserkennungseinrichtung 5 ein Speicher 6 angeschlossen. Dieser Speicher 6 ist Bestandteil der Meß- bzw. Auswerteelektronik 15 (z.B. bekannt aus Hofmann-news 5, Impressum 09.85D), in denen Meßgebersignale, welche beim Unwuchtmeßvorgang in den Meßläufen erhalten werden, ausgewertet werden. Die ausgewerteten Meßgebersignale werden dann in Form von Größen- und Winkelangaben für die am Kraftfahrzeugrad einzusetzenden Ausgleichsgewichte von einer Anzeigeeinrichtung 8 angezeigt. Sowohl an den Speicher 6 als auch an die Positionserkennungseinrichtung 5 ist ein Vergleicher 7 angeschlossen, der mit der Anzeigeeinrichtung 8 verbunden ist.

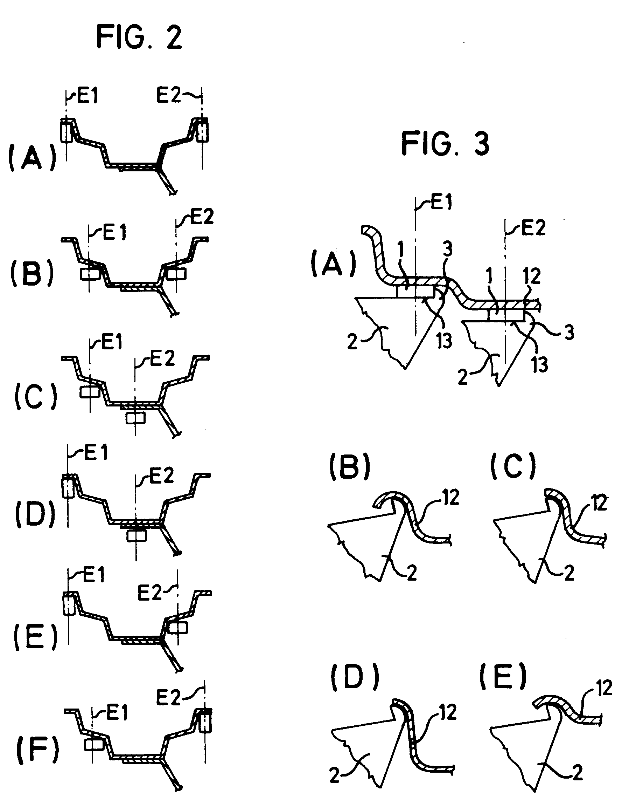

Der Tasthebel 2 besitzt einen mit einer Feder 17 beaufschlagten Gewichthalter 4 in Form einer Greiferklaue zum Festhalten eines Ausgleichsgewichts 1 am Tasthebel 2 zwischen Greiferklaue und Tastspitze 3. Vor Durchführung des Unwuchtmeßvorgangs wird die Felge des Kraftfahrzeugrades im Bereich der Ausgleichsebenen E1, E2 (strichpunktiert dargestellt in den Figuren) abgetastet. Wenn es sich beispielsweise um eine Leichtmetallfelge eines Standardkraftfahrzeugrades handelt, an welchem Klebegewichte angeordnet werden sollen, kann man die in der Figur 3 (A) gezeigte Abtastung an der Felge 12 vornehmen. Dabei ist zu berücksichtigen, daß die Abtastspitze 3 nicht exakt mit dem Schwerpunkt S des einzusetzenden Ausgleichsgewichtes 1 übereinstimmt. Dieser Schwerpunkt S muß jedoch für einen genauen Ausgleichsvorgang in der jeweiligen Ausgleichsebene E1 bzw. E2 liegen. Um hier eine genaue Abtastung zu erreichen, wird mit Hilfe des Gewichthalters 4 in den Tasthebel 2 ein Ausgleichsgewicht 1 als Bezugsgewicht eingesetzt. Die Abmessungen des eingesetzten Ausgleichsgewichts 1 und die Lage des Schwerpunkts des Ausgleichsgewichts 1, insbesondere der Abstand des Schwerpunkts von der Auflagekante 13 (Figur 1) und der Abstand des Schwerpunkts von der Tastspitze 3 sind bekannte Größen. Unterschiedliche Abmessungen der Ausgleichsgewichte in der Auszugsrichtung (Pfeil 10 in Figur 1) und Verlagerungen des Schwerpunkts in dieser Richtung lassen sich mit einer in Figur 6 dargestellten Abtasteinrichtung ermitteln und an die Positionserkennungseinrichtung 5 weitergeben. Aus der DE-OS 27 37 524 ist es bekannt, wie in der Positionserkennungseinrichtung 5 diese Abmessungen für eine richtige Ebenenbestimmung zu berücksichtigen sind. Für den Fall, daß eine Ausgleichsart nach Figur 2 C gewählt werden soll, ist eine entsprechende Abtastung der Ausgleichsebenen E1 und E2 möglich. Die entsprechenden Positionierungen des Tasthebels 2 werden von der Einrichtung 5 erkannt und proportionale Signale in digitaler Form in den Speicher 6 eingegeben. Diese die Positionen der Ausgleichsebenen E1 und E2 sowie die Radien der Positionen der Ausgleichsgewichte in den Ausgleichsebenen angebenden Daten werden bei der Auswertung der von den nicht näher dargestellten Meßgebern während des Unwuchtmeßvorgangs gelieferten Meßgebersignale in der Meß- und Auswerteelektronik 15 mit berücksichtigt.

Bei Stahlfelgen von Standardrädern wird beispielsweise die in der Figur 3 (B) gezeigte Felgenabtastung vorgenommen. Bei Leichtmetallfelgen von Standardrädern wird beispielsweise die in der Figur 3 (C) dargestellte Abtastung der Radfelge vorgenommen. Bei Flachbett- bzw. Tiefbettfelgen wird beispielsweise die in der Figur 3 (D) dargestellte Abtastung vorgenommen. Bei Stahlfelgen von Steilschulterrädern wird beispielsweise die in der Figur 3 (E) dargestellte Abtastung vorgenommen. Die in den Figuren 3 (B) bis (E) dargestellten Abtastungen sind die Abtastungen in den linken Ausgleichsebenen. Die Lage der rechten Ausgleichsebene läßt sich mit Hilfe eines als Zubehör zur Auswuchtmaschine gehörigen Felgenbreitentasters aus der Position der linken Ausgleichsebene gewinnen. Bei dem zur Abtastung der Felge in der Figur 3 (A) gezeigten Ausgleichsgewicht kann es sich um ein Klebegewicht handeln, das mit der Schutzfolie nach oben auf die Auflagefläche 13 des Tasthebels 2 aufgelegt wird. Die Tastspitze 3 mit dem eingelegten Ausgleichsgewicht 1 wird für eine bestimmte Zeit, beispielsweise zwei sec., in der Abtaststellung gehalten, um genügend Zeit für die Meßwertübernahme in den Speicher 6 vorzusehen. Diese Stillhaltezeit kann beispielsweise zwei sec. betragen.

Wenn für bestimmte Ausgleichsarten die Positionierung der Ausgleichsgewichte in bestimmen Ebenen an der Felge vorgegeben ist, läßt sich das Abtasten der Felgenabmessungen für die Bedientungsperson weiterhin erleichtern. In der Figur 2 sind verschiedene Ausgleichsarten für Standardfelgen dargestellt. In der Figur 2 (A) ist eine normale Gewichteplazierung an den Felgenhörnern dargestellt. In aller Regel handelt es sich hier um Federgewichte, die in die Felgenhörner geklemmt werden.

In der Figur 2 (B) ist die symmetrische Anbringung von Klebegewichten an Felgenschultern gezeigt.

In der Figur 2 (C) ist ein Anbringen von Klebegewichten gezeigt, bei dem ein verstecktes Klebegewicht in der Felgenschüssel angebracht wird, um das attraktive Erscheinungsbild des Kraftfahrzeugrades, insbesondere Leichtmetallrades, nicht zu stören.

Bei dem in der Figur 2 (D) dargestellten Ausgleichsart wird ein Federgewicht am linken Felgenhorn und ein Klebegewicht in der Felgenschüssel angebracht.

Bei der in der Figur 2 (E) dargestellten Ausgleichsart wird ein Federgewicht am linken Felgenhorn und ein Klebegewicht an der rechten Felgenschulter angebracht.

Bei der in der Figur 2 (F) dargestellten Ausgleichsart wird ein Federgewicht am rechten Felgenhorn und ein Klebegewicht an der linken Felgenschulter vorgesehen.

Diese zur Gewichteplazierung vorhandenen Möglichkeiten (Ausgleichsarten) können an der Anzeigeeinrichtung 8 durch Wiedergabe der in der Figur 2 dargestellten Felgensymbole mit den durch schematisch dargestellte Ausgleichsgewichte gekennzeichneten Ausgleichsebenen E1 und E2 angezeigt werden. Die verschiedenen Ausgleichsarten (Gewichteplazierungen) (A) bis (F) können separat angezeigt werden. Die durch den Abtasthebel 2 abzutastenden Ausgleichsebenen E1 und E2 können dann durch Sichtbarmachen, beispielsweise durch Blinken der Gewichtesymbole, welche die Lage der Ausgleichsebenen E1 und E2 angeben, kenntlich gemacht werden. Die Bedienungsperson weiß dann, welche Stellen der Felge des eingespannten Kraftfahrzeugrades mit dem Abtasthebel abzutasten sind. Es blinkt immer nur ein Gewichtssymbol, welches die am eingespannten Kraftfahrzeugrad abzutastende Ausgleichsebene anzeigt. Wenn diese Ausgleichsebene abgetastet ist und die entsprechenden Daten im Speicher 6 abgelegt sind, blinkt das Gewichtssymbol für die zweite Ausgleichsebene.

Um diese Betriebsart (Figur 2) einzuschalten, kann ein Schalter 9 betätigt werden, der dann geschlossen wird und das Blinken des entsprechenden Gewichtesymbols veranlaßt, wenn der Tasthebel 2 aus seiner Ruhelage bewegt wird.

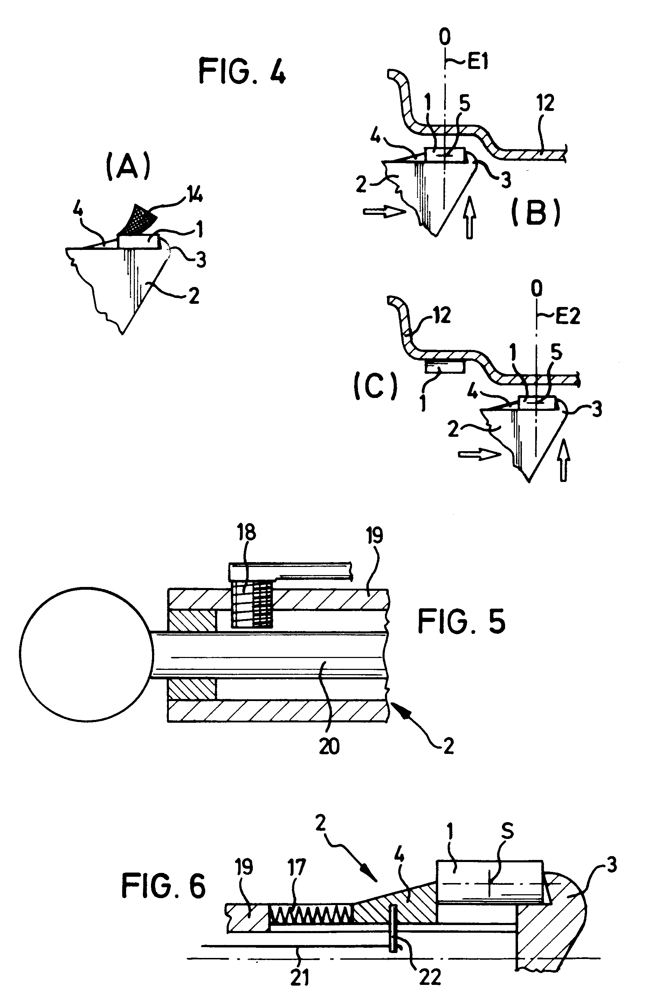

Unter Bezugnahme auf die Figur 4 wird die Betriebsart des Wiederauffindens (Wiederauffindemodus) der zuvor im Abtastmodus ausgemessenen Ausgleichssebenen E1 und E2 anhand der in Figur 2 C dargestellten Ausgleichsart erläutert. Ein Ausgleichsgewicht 1, das als Klebegewicht ausgebildet ist, wird am Tasthebel 2 mit Hilfe des federbeaufschlagten Halters 4 zwischen Greiferklaue und aufwärts gebogener Tastspitze 3 befestigt und die oben liegende Schutzfolie 14 abgezogen (Figur 4 A). Die Tastspitze 3 wird an die Felge 12 herangeführt, wobei der Abstand des Tasthebels 2 von der jeweiligen Ausgleichsebene E1 bzw. E2 an der Anzeigeeinrichtung 8 angezeigt wird. Sobald das Ausgleichsgewicht 1 bzw. dessen Schwerpunkt 5 bis in eine der beiden Ebenen, beispielsweise die linke Ausgleichsebene E1, herangeführt ist, ertönt ein akustisches Signal, welches dem Bediener anzeigt, daß das Gewicht bis in die Ausgleichsebene gebracht ist. Gleichzeitig erfolgt die Abstandsanzeige Null (Figur 4 B). Das Klebegewicht wird dann mit Hilfe des Gewichthalters an die Felge 12 herangeführt und angedrückt. Der Tasthebel 2 wird von dem an die Felge 12 angehefteten Ausgleichsgewicht 1 gelöst und in die Ausgangsposition zurückgebracht. Dort wird ein zweites Ausgleichsgewicht 1 am Tasthebel 2 befestigt, und der gleiche Vorgang wiederholt sich für das Einsetzen des Ausgleichsgewichtes 1 in der rechten Ausgleichsebene E2. Wie aus den Figuren 4 (B) und (C) zu ersehen ist, werden die Ausgleichsgewichte 1 in solchen Positionen an der Felge 12 befestigt, daß ihre Schwerpunkte S in den vorher ausgemessenen Ausgleichsebenen E1 und E2 liegen. Zur Einschaltung der Betriebsart des Wiederauffindens der jeweiligen Ausgleichsebene beim Ausgleichsvorgang kann ein Schalter 16 betätigt werden. Dieser Schalter kann manuell oder automatisch durch ein Ablaufprogramm oder auch durch eine bestimmte Steuerbewegung des Tasthebels 2 betätigt werden.

In der Figur 5 ist eine Klemmvorrichtung dargestellt zum Festhalten des momentanen Auszugs des Tasthebels 2. Die Klemmvorrichtung besteht aus einer Klemmschraube 18, welche in die Seitenwand eines Auszugsrohres 19 des Tasthebels 2 eingesetzt ist. Die Klemmschraube 18 befindet sich in der Nähe des Endes, das dem Schwenkpunkt des Tasthebels 2 für die Schwenkbewegung in Pfeilrichtung 11 benachbart ist. Auf diese Weise wird erreicht, daß praktich alle Positionen innerhalb des Auszugsbereichs durch Klemmung fixiert werden können. Für den Auszug des Tasthebels 2 ist das Auszusrohr 19 an einem Führungsstab 20, der um die erwähnte Schwenkachse schwenkbar ist, geführt. Bei Betätigung der Klemmschraube 18 wird diese nach innen bewegt und kommt in klemmenden Eingriff mit dem Führungsstab 20, so daß der Auszug des Auszugrohres 19 gegenüber dem Führungsstab 20 blockiert ist.

In der Figur 6 ist eine Abtasteinrichtung zur Abtastung der Abmessungen des Ausgleichsgewichts 1 in Auszugsrichtung dargestellt. Das Ausgleichsgewicht ist zwischen die Abtastspitze 3 und den Halter 4 durch die Kraft der Feder 17 eingeklemmt. Am Halter 4, der im Auszugsrohr 19 in axialer Richtung verschiebbar ist, ist ein Befestigungsstift 22 befestigt. Am Befestigungsstift 22 ist eine Schnur 21 oder ein Zugdraht befestigt, der mit einem Potentiometer zur Ermittlung der Auszugslänge in der Positionserkennungseinrichtung 5 verbunden ist. Wenn sich die axialen Abmessungen des Ausgleichsgewichts 1 ändern, verschiebt sich auch der Schwerpunkt S entsprechend. Dies kann durch die dargestellte Abtasteinrichtung mitberücksichtigt werden. Dabei beträgt die jeweilige Schwerpunktverschiebung die Hälfte der jeweiligen Abmessungsänderung zwischen dem Halter 4 und der Abtastspitze 3. Beim dargestellten Ausführungsbeispiel ist der Befestigungsstift 22 starr mit dem Halter 4 verbunden. Es ist jedoch auch möglich, den Befestigungsstift 2 als Hebel auszubilden, der in Abhängigkeit von der Abmessung des Ausgleichsgewichts 1 entsprechend verschwenkt wird. Diese Schwenkbewegung wird dann ebenfalls auf die Schnur 21 übertragen. Dabei kann das Übersetzungsverhältnis so gewählt werden, daß die oben angesprochene Schwerpunktverschiebung, welche der Hälfte der jeweiligen Abmessungsänderung in axialer Richtung entspricht, in mechanischer Weise berücksichtigt ist. Beim starren Stift kann dies durch einen entsprechenden Rechenvorgang in der Auswerteelektronik oder in der Positionserkennungseinrichtung berücksichtigt werden.

## Patentansprüche

1. Verfahren zum Ausgleich einer Unwucht an einem Kraftfahrzeugrad mit Hilfe von einem oder mehreren Ausgleichsgewichten, bei dem für die Auswertung von bei einem Unwuchtmeßvorgang erhaltenen Meßwerten in einem Abtastmodus der jeweilige Radius und die jeweilige Ausgleichsebene für die Ausgleichspositionen am Scheibenrad mit Hilfe einer Tasteinrichtung abgetastet und gespeichert werden und bei dem aus den Meßwerten und den gespeicherten Werten für den Radius und die Ausgleichsebene die Ausgleichsposition und Größe des am Kraftfahrzeugrad zu befestigenden jeweiligen Ausgleichsgewichts bestimmt werden,
dadurch **gekennzeichnet,**
daß mit Hilfe der Tasteinrichtung die gespeicherte Ausgleichsebene, in welcher die von der Auswerteelektronik bestimmte Ausgleichsposition liegt, wieder aufgefunden wird indem von der Auswerteelektronik ein Signal erzeugt wird, wenn die Tasteinrichtung die Ausgleichsebene erreicht.

2. Verfahren nach Anspruch 1, dadurch gekennzeichnet, daß der Abstand der Abtasteinrichtung von der jeweiligen gespeicherten Ausgleichsebene angezeigt wird.

3. Verfahren nach Anspruch 1 oder 2, dadurch gekennzeichnet, daß zum Abtasten der Ausgleichsebene und des wirksamen Durchmessers des eingesetzten Ausgleichsgewichts für die Meßwerteauswertung die Innenabmessung (Innendurchmesser) des Scheibenrades in der jeweiligen Ausgleichsebene mit zwischen der Abasteinrichtung (Abtastspitze) und der Innenabmessung angeordnetem Ausgleichsgewicht abgetastet wird.

4. Verfahren nach einem der Ansprüche 1 bis 3, dadurch gekennzeichnet, daß durch eine mit der Meßelektronik verbundene Anzeigeeinrichtung ein Felgenquerschnitt mit den jeweils möglichen Ausgleichsebenen angezeigt wird, daß eine jeweilige für eine ausgewählte Ausgleichsart bestimmte Ausgleichsebene durch ein Signal während des Abtastvorganges angezeigt wird und nach dem Abtasten der angezeigten Ausgleichsebene am zu messenden Kraftfahrzeugrad die Anzeige zum Erlöschen gebracht wird.

5. Verfahren nach Anspruch 4, dadurch gekennzeichnet, daß die Anzeige der am Kraftfahrzeugrad abzutastenden Ausgleichsebene dann beginnt, wenn die Tasteinrichtung aus ihrer Ruhelage bewegt wird.

6. Verfahren nach Anspruch 4 oder 5, dadurch gekennzeichnet, daß zur Durchführung eines dynamischen Unwuchtausgleichs die Anzeige der beiden abzutastenden Ausgleichsebenen nacheinander erfolgt.

7. Verfahren nach einem der Ansprüche 1 bis 6, dadurch gekennzeichnet, daß die Tasteinrichtung in ihrer jeweiligen Abtaststellung fixiert wird.

8. Verfahren nach Anspruch 7, dadurch gekennzeichnet, daß die Tasteinrichtung manuell fixiert wird.

9. Verfahren nach Anspruch 7, dadurch gekennzeichnet, daß die Tasteinrichtung gesteuert durch die Meßelektronik fixiert wird.

10. Verfahren nach einem der Ansprüche 7 bis 9, dadurch gekennzeichnet, daß bei fixierter Tasteinrichtung das Kraftfahrzeugrad in die Ausgleichswinkellage gedreht wird.

11. Verfahren nach einem der Ansprüche 1 bis 10, dadurch gekennzeichnet, daß zwischen dem Abtastmodus und Wiederauffindemodus umgeschaltet wird.

12. Verfahren nach einem der Ansprüche 1 bis 11, dadurch gekennzeichnet, daß sowohl beim Abtastmodus als auch beim Wiederauffindemodus ein Ausgleichsgewicht in die Tasteinrichtung eingesetzt wird und daß die beim Unwuchtausgleich wirksame Schwerpunktlage des Ausgleichsgewichts beim Abtasten und Wiederauffinden der Ausgleichsebene verwendet wird.

13. Vorrichtung zum Ausgleich einer Unwucht an einem Kraftfahrzeugrad mit Hilfe von einem oder mehreren Ausgleichsgewichten mit einer Tasteinrichtung zum Abtasten von Scheibenradabmessungen, einer mit der Abtasteinrichtung verbundenen Positionserkennungseinrichtung, einem mit der Positionserkennungseinrichtung verbundenen Speicher, in welchem Radius und Ausgleichsebene möglicher Ausgleichspositionen am Scheibenrad speicherbar sind, und einer mit einer Meßanordnung und dem Speicher verbundenen Auswerteelektronik zur Bestimmung der Ausgleichsposition und Größe des am Kraftfahrzeugrad jeweils zu befestigenden Ausgleichsgewichts zur Durchführung eines Verfahrens nach Anspruch 1,
dadurch gekennzeichnet, daß mit dem Speicher (6) und der Positionserkennungseinrichtung (5) ein Vergleicher (7) verbunden ist und daß an den Vergleicher (7) eine Anzeigeeinrichtung (8) angeschlossen ist, die vom Vergleicher (7) ein Signal empfängt, wenn die Position der Tasteinrichtung (2) die gespeicherte Ausgleichsebene erreicht.

14. Vorrichtung nach Anspruch 13, dadurch gekennzeichnet, daß die Tasteinrichtung (2) einen Gewichthalter (4) aufweist.

## Claims

1. A method of correcting an unbalance on a motor vehicle wheel by means of one or more balancing weights, wherein for evaluation of measurement values obtained in an unbalance measuring procedure in a sensing mode the respective radius and the respective balancing plane for the balancing positions on the disc wheel are sensed by means of a sensing device and stored and wherein the balancing position and the magnitude of the respective balancing weight to be fixed to the motor vehicle wheel are determined from the measurement values and the stored values for the radius and the balancing plane, characterised in that the stored balancing plane in which the balancing position as determined by the electronic evaluation means is disposed is retrieved by means of the sensing device, by the electronic evaluation means producing a signal when the sensing device reaches the balancing plane.

2. A method according to claim 1 characterised in that the spacing of the sensing device from the respective stored balancing plane is indicated.

3. A method according to claim 1 or claim 2 characterised in that, for sensing the balancing plane and the effective diameter of the balancing weight used, for measurement value evaluation, the inside dimension (inside diameter) of the disc wheel is sensed in the respective balancing plane with a balancing weight which is arranged between the sensing device (sensing tip) and the inside dimension.

4. A method according to one of claims 1 to 3 characterised in that a wheel rim cross-section with the respectively possible balancing planes is displayed by a display device connected to the electronic measuring means, that a respective balancing plane which is intended for a selected balancing mode is displayed by a signal during the sensing operation and after sensing of the displayed balancing plane on the motor vehicle wheel to be measured the display is cancelled.

5. A method according to claim 4 characterized in that display of the balancing plane to be sensed on the motor vehicle wheel begins when the sensing device is moved out of its rest position.

6. A method according to claim 4 or claim 5 characterized in that for carrying out a dynamic unbalance correcting operation the two balancing planes to be sensed are displayed in succession.

7. A method according to one of claims 1 to 6 characterised in that the sensing device is fixed in its respective sensing position.

8. A method according to claim 7 characterized in that the sensing device is fixed manually.

9. A method according to claim 7 characterised in that the sensing device is fixed under the control of the electronic measuring means.

10. A method according to one of claims 7 to 9 characterized in that when the sensing device is fixed the motor vehicle wheel is turned into the angular position for unbalance correction.

11. A method according to one of claims 1 to 10 characterized in that the procedure is switched over between the sensing mode and the retrieval mode.

12. A method according to one of claims 1 to 11 characterized in that both in the sensing mode and also in the retrieval mode a balancing weight is fitted into the sensing device and that the position of the centre of gravity of the balancing weight, which is effective in the unbalance correcting operation, is used in the procedure for sensing and retrieving the balancing plane.

13. Apparatus for correcting an unbalance on a motor vehicle wheel by means of one or more balancing weights comprising a sensing device for sensing disc wheel dimensions, a position detecting device connected to the sensing device, a storage means which is connected to the position detecting device and in which the radius and the balancing plane of possible balancing positions on the disc wheel can be stored, and an electronic evaluation means connected to a measuring arrangement and the storage means, for determining the balancing position and the magnitude of the balancing weight to be respectively fixed to the motor vehicle wheel, for carrying out a method according to claim 1, characterised in that a comparator (7) is connected to the storage device (6) and the position detecting device (5) and that connected to the comparator (7) is a display device (8) which receives a signal from the comparator (7) when the position of the sensing device (2) reaches the stored balancing plane.

14. Apparatus according to claim 13 characterized in that the sensing device (2) has a weight holder (4).

## Revendications

1. Procédé d'équilibrage du balourd d'une roue de véhicule automobile à l'aide d'un ou de plusieurs poids d'équilibrage, selon lequel, pour évaluer des valeurs de mesure obtenues lors d'un processus de mesure du balourd, lors d'un mode d'exploration, la rayon respectif et la plan respectif d'équilibrage pour les positions d'équilibrage sur la roue pleine sont explorés et mémorisés à l'aide d'un dispositif palpeur et selon lequel la position d'équilibrage et la valeur du poids d'équilibrage devant être fixé à la roue du véhicule automobile sont déterminées à partir des valeurs de mesure et des valeurs mémorisées pour le rayon et la plan d'équilibrage,
caractérisé par le fait
que le plan d'équilibrage mémorisé, dans lequel se trouve la position d'équilibrage déterminée par le système électronique d'évaluation, est redécouvert à l'aide du dispositif palpeur, par le fait que le système électronique d'évaluation produit un signal lorsque le dispositif palpeur atteint le plan d'équilibrage.

2. Procédé suivant la revendication 1, caractérisé par le fait que la distance entra le dispositif palpeur et la plan d'équilibrage mémorisé est affichée.

3. Procédé suivant la revendication 1 ou 2, caractérisé par le fait que pour l'exploration du plan d'équilibrage et du diamètre effectif du poids d'équilibrage utilisé, on explore, pour l'évaluation des valeurs de mesure, la grandeur Intérieure (diamètre intérieur) de la roue pleine dans le plan d'équilibrage avec un poids d'équilibrage disposé entre le dispositif d'exploration (pointe de palpage) et la circonférence intérieure.

4. Procédé suivant l'une des revendications 1 à 3, caractérisé par le fait qu'un dispositif d'affichage rellé au système électronique de mesure affiche une section transversale de jante comportant les plans d'équilibrage possibles, qu'un plan d'équilibrage, déterminé pour un type sélectionné d'équilibrage, est affiché par un signal pendant l'opération d'exploration et qu'après l'exploration du plan d'équilibrage affiché sur la roue à mesurer du véhicule automobile, l'affichage s'éteint.

5. Procédé suivant la revendication 4, caractérisé par le fait que l'affichage du plan d'équilibrage, qui doit être exploré sur la roue du véhicule automobile, commence lorsque le dispositif palpeur est déplacé hors de sa position de repos.

6. Procédé suivant la revendication 4 ou 5, caractérisé par la fait que pour l'exécution d'un équilibrage dynamique, l'affichage des deux plans d'équilibrage devant être explorés s'effectue successivement.

7. Procédé suivant l'une des revendications 1 à 6, caractérisé par le fait qu'on immbilise la dispositif palpeur dans sa position de palpage.

8. Procédé suivant la revendication 7, caractérisé par le fait qu'on immobilise le dispositif palpeur manuellement.

9. Procédé suivant la revendication 7, caractérisé par la fait qu'on immobilise la dispositif palpeur d'une manière commandée par le système électronique de mesure.

10. Procédé suivant l'une des revendications 7 à 9, caractérisé par le fait que, lorsque le dispositif palpeur est immobilisé, on amène par rotation la roue du véhicule automobile dans la position angulaire d'équilibrage.

11. Procédé suivant l'uns des revendications 1 à 10, caractérisé par le fait qu'on passe du mode d'exploration au mode de redécouverte.

12. Procédé suivant l'une des revendications 1 à 11, caractérisé par le fait qu'aussi bien lors du mode d'exploration que lors du mode de redécouverte, on insère un poids d'équilibrage dans le dispositif palpeur et que la position du centre de gravité du poids d'équilibrage, qui est effective lors de l'équilibrage du balourd, est utilisée lors de l'exploration et de la redécouverte du plan d'équilibrage.

13. Dispositif pour compenser un balourd d'une roue de véhicule automobile, à l'aide d'un ou de plusieurs poids d'équilibrage, comportant un dispositif palpeur servant à explorer des dimensions d'une roue pleine, un dispositif d'identification de position relié au dispositif palpeur, une mémoire reliée au dispositif d'identification de position et dans laquelle peuvent être mémorisés le rayon et le plan d'équilibrage de positions d'équilibrage possibles sur la roue pleine, et un système électronique d'évaluation relié à un dispositif électronique de mesure et à la mémoire, pour la détermination de la position d'équilibrage et de la valeur du poids d'équilibrage devant être fixé sur la roue du véhicule automobile, pour la mise en oeuvre d'un procédé suivant la revendication 1, caractérisé par le fait qu'un comparateur (7) est relié à la mémoire (6) et au dispositif d'identification de position (5) et qu'au comparateur (7) est raccordé un dispositif d'affichage (8), qui reçoit un signal du comparateur (7) lorsque la position du dispositif palpeur (2) atteint le plan d'équilibrage mémorisé.

14. Procédé suivant la revendication 13, caractérisé par le fait que le dispositif palpeur (1) comporte un porte-poids (4).
